**Europäisches Patentamt**

**European Patent Office**

**Office européen des brevets**

(19)

(11) **EP 1 229 321 A2**

(12) ## EUROPEAN PATENT APPLICATION

(43) Date of publication:
**07.08.2002 Bulletin 2002/32**

(51) Int Cl.⁷: $G01N\ 17/00$, $G01N\ 21/76$

(21) Application number: **02250477.3**

(22) Date of filing: **24.01.2002**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **06.02.2001 US 266727 P**<br><br>(71) Applicant: **ROHM AND HAAS COMPANY**<br>**Philadelphia, Pennsylvania 19106-2399 (US)** | (72) Inventors:<br>• **Clark, Patrick Albert**<br>**Valley Forge, Pennsylvania 19481 (US)**<br>• **Weidemaier, Kristin**<br>**Yardley, Pennsylvania 19067 (US)**<br><br>(74) Representative: **Kent, Venetia Katherine**<br>**Rohm and Haas (UK) Ltd**<br>**European Operations Patent Dept.**<br>**Lennig House**<br>**2 Mason's Avenue**<br>**Croydon, CR9 3NB (GB)** |

(54) **Method for predicting outdoor durability of coatings**

(57)     A method for predicting the outdoor durability of a first coating relative to the outdoor durability of at least one other of a set of coatings, all of the coatings having been formed from aqueous coating compositions comprising a thermoplastic emulsion polymer, particularly a predominantly acrylic thermoplastic emulsion polymer, and, optionally, a pigment, comprising exposing the set of coatings to the same ambient outdoor conditions for the same period of time, subjecting the exposed coatings to a chemiluminescence test, and comparing the result of said chemiluminescence test performed on the first coating to the corresponding result for at least one other of the set of coatings.

**EP 1 229 321 A2**

**EP 1 229 321 A2**

**Description**

This invention relates to a method for predicting the outdoor durability of a coating formed from an aqueous coating composition including a thermoplastic emulsion polymer and, optionally, a pigment. More particularly, this invention relates to a method for predicting the outdoor durability of a first coating relative to the outdoor durability of others of a set of coatings by exposing the set of coatings to the same ambient outdoor conditions for the same period of time, subjecting the exposed coatings to a chemiluminescence test, and comparing the results of the chemiluminescence tests.

The durability of a clear or pigmented coating exposed to outdoor conditions is an important property of the coating. Durability is a multifaceted issue. Durability relates to the fate of various properties of the coating such as, for example, at least one of gloss, tint, adhesion, and mechanical properties, which may have different rates of attrition on exposure and different importance for various coatings. It is believed that light, oxygen, water, and temperature all play a role in the outdoor durability of a coating. And the coating itself may be a physically and chemically heterogeneous system.

Outdoor exposure under conditions and for a time comensurate with the expected service life of the coating is inconvenient at best. Accelerated and reliable methods of predicting the outdoor durabililty of a coating have been sought for decades. Most attempts have relied on exposure of the coating to more exacting conditions than would ordinarily be met such as exposure of the coating to intense sunlight and humidity in the tropics or exposure of the coating to artificial conditions such as exposure to shorter wavelength, higher energy light or to higher than ambient intensity normal sunlight spectrum in order to accelerate the degradation of the coating. Even though they are accelerated relative to real time outdoor exposure, many of these tests still take many months to complete and, perhaps through effecting changes in the chemical and/or physical nature of the degradation process, may not correlate well with durability under actual use conditions.

Polymer Degradation and Stability, Vol. 47, pages 117-127 (1995) discloses the use of reflectance FT-IR spectroscopy to examine the environmental stability of aqueous acrylic-based latices subjected to UV irradiation.

Polymer Degradation and Stability, Vol. 60, pages 351-360 (1998) discloses the use of chemiluminescence imaging to study the photodegradation of crosslinked acrylic automotive coatings as a function of artificial weathering time.

Progress in Organic Coatings, Vol. 27, 95-106 (1996) discloses procedures which are used for the evaluation of the durability of polymer coatings. Also disclosed is that chemiluminescence is not particularly suitable for fast answer durability predictions, chiefly because of the long exposure times necessary, and that other drawbacks include the inability of the technique to examine pigmented systems.

It is desired to be able to predict the outdoor durability of a coating from a measurement on a coating exposed for a conveniently short period of time under ambient outdoor conditions similar to the service conditions to which the coating will be subjected in use, but a period of time effective to produce a reliable prediction of the outdoor durability. By "outdoor durability" is meant herein outdoor durability for a period of at least six months. By "a conveniently short period of time" is meant a period of three months or less, preferably one month or less. It has now been surprisingly found that the results of a certain chemiluminescence test performed on coatings exposed outdoors for a conveniently short period of time under natural conditions predicts the outdoor durability of the coatings, in particular the outdoor durability of the members of a set of coatings relative to one another.

In a first aspect of the present invention there is provided a method for predicting the outdoor durability of a first coating relative to the outdoor durability of at least one other of a set of coatings, each of said coatings having been formed from aqueous coating compositions comprising a thermoplastic emulsion polymer and, optionally, a pigment, comprising exposing said set of coatings to the same ambient outdoor conditions for the same period of time, subjecting said exposed coatings to a chemiluminescence test, and comparing the result of said chemiluminescence test performed on said first coating to the corresponding result for others of said set of coatings.

In one embodiment the method of this invention includes exposing a set of coatings, the relative durability of which is of interest. The set of coatings includes a first coating and at least one other coating different in composition from the first coating. Typically, the coatings which are exposed contain different emulsion polymer compositions and the same amounts of other ingredients such as pigment(s). It is recognized that various coating composition ingredients and variations in the relative amounts of coating composition ingredients may also affect the outdoor durability of coatings and the effect of such variations on outdoor durability may be predicted by the method of this invention as well.

In another embodiment the method of this invention includes exposing a set of coatings one or more members of which has been, is being, or will be exposed outdoors for an extended period of time so that the outdoor durability of the coatings relative to the actual outdoor performance of one or more coatings of the set may be predicted.

The coatings are formed by drying, or by allowing to dry, at temperatures from 0 °C to 100 °C aqueous coating compositions which have been applied to substrate(s). The aqueous coating compositions contain at least one thermoplastic emulsion polymer and, optionally, at least one pigment.

The process for preparing an aqueous emulsion polymer as used in the coating composition of this invention includes providing at least one ethylenically unsaturated monomer and a free radical thermal or redox initiator system under emulsion polymerization conditions.

The aqueous emulsion polymer contains, as copolymerized unit(s), at least one copolymerized monoethylenically-unsaturated monomer such as, for example, (meth)acrylic monomer including esters, amides, and nitriles of (meth)acrylic acid, such as, for example, (meth)acrylic ester monomer including methyl acrylate, ethyl acrylate, butyl acrylate, 2-ethylhexyl acrylate, decyl acrylate, lauryl acrylate, stearyl acrylate, methyl methacrylate, butyl methacrylate, hydroxyethyl methacrylate, hydroxypropyl methacrylate, aminoalkyl (meth)acrylate, N-alkyl aminoalkyl (methacrylate), N,N-dialkyl aminoalkyl (meth)acrylate; urieido (meth)acrylate; (meth)acrylonitrile and (meth)acrylamide; styrene or alkyl-substituted styrenes; butadiene; vinyl acetate, vinyl propionate, or other vinyl esters; vinyl monomers such as vinyl chloride, vinylidene chloride, and N-vinyl pyrollidone; (meth)acrylic acid, crotonic acid, itaconic acid, sulfoethyl methacrylate, phosphoethyl methacrylate, fumaric acid, maleic acid, monomethyl itaconate, monomethyl fumarate, monobutyl fumarate, and maleic anhydride. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. Preferably the thermoplastic emulsion polymer is a predominantly acrylic polymer by which is meant herein that greater than 50% by weight of the polymer consists of copolymerized esters, amides, and nitriles of (meth)acrylic acid and the acids themselves.

By "thermoplastic emulsion polymer" herein is meant that the emulsion polymer prepared by emulsion polymerization is substantially thermoplastic, i.e., the polymer is not crosslinked by the addition of monomers such as multiethylenically unsaturated monomers or reactive moieties which will crosslink the polymer during polymerization, in the aqueous coating composition in the wet state, during the drying of the aqueous coating composition to provide a coating, or during the subsequent outdoor exposure. For example, the thermoplastic emulsion polymer does not contain, as copolymerized units, 2-isocyanatoethyl methacrylate and hydroxy-functional monomers, nor, for example, does the aqueous coating composition contain an emulsion polymer containing copolymerized units of 2-isocyanatoethyl methacrylate and a polymeric or non-polymeric diol. Nor does the thermoplastic emulsion polymer contain, as copolymerized units, oxidatively crosslinkable monomers such as, for example, allyl methacrylate and linoleyl methacrylate. However, emulsion polymers containg a low level of adventitious crosslinking, sometimes refered to as gel content, are not excluded from the thermoplastic emulsion polymers used in this invention. Preferably, the gel content measured as insolubles in tetrahydrofuran do not exceed 30% by weight on a dry polymer basis.

The polymerization techniques used to prepare the emulsion polymers used in this invention are well known in the art. Typically, free radical addition polymerization of ethylenically unsaturated monomers is used. A thermal or redox initiator system may be used. Conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer.

The reaction temperature is maintained at a temperature lower than 100 °C throughout the course of the reaction. Preferred is a reaction temperature between 30 °C and 95 °C, more preferably between 50 °C and 90 °C. The monomer mixture may be added neat or as an emulsion in water. The monomer mixture may be added in one or more additions or continuously, linearly or not, over the reaction period , or combinations thereof.

Further, a chain transfer agent such as, for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate in an amount of 0.1 to 5.0 % by weight based on monomer weight may be used.

In another aspect of the present invention the thermoplastic emulsion polymer may be prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain the same monomers, surfactants, chain transfer agents, etc. as disclosed herein-above for the thermoplastic emulsion polymer. The polymerization techniques used to prepare such multistage emulsion polymers are well known in the art such as, for example, US Patents No. 4,325,856; 4,654,397; and 4,814,373.

The thermoplastic emulsion polymer has an average particle diameter from 20 to 1000 nanometers, preferably from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size thermoplastic emulsion polymers wherein two or more distinct particle sizes or very broad distributions are provided as is taught in US Patents No. 5,340,858; 5,350,787; 5,352,720; 4,539,361; and 4,456,726.

The glass transition temperature ("Tg") of the thermoplastic emulsion polymer is typically from -20 °C to 100 °C, preferably from -20 °C to 70 °C, more preferably from 0 °C to 50 °C; the monomers and amounts of the monomers selected to achieve the desired polymer Tg range are well known in the art. Tgs used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2),$$

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2, all temperatures being in °K.

The glass transition temperatures of homopolymers may be found, for example, in "Polymer Handbook", edited by J. Brandrup and E.H. Immergut, Interscience Publishers.

The aqueous coating composition from which the coating is formed includes at least one emulsion polymer as described hereinabove and, optionally, one or more pigments. By "pigment" is meant an organic or inorganic substantially water-insoluble solid particle and includes, for example, pigments, fillers, and solid or void-containing polymeric particles which are not film-forming under the conditions under which the coating is formed. The amount of pigment in the aqueous coating composition may vary from a pigment volume concentration (PVC) of 0 to 85 and thereby encompass coatings otherwise described in the art, for example, as clear coatings, flat coatings, satin coatings, semi-gloss coatings, gloss coatings, primers, textured coatings, elastomeric wall or roof coatings, caulks, sealants, and the like. The pigment volume concentration is calculated by the following formula:

$$PVC\ (\%) = \frac{volume\ of\ pigment(s),\ +\ volume\ extender(s)}{total\ dry\ volume\ of\ paint} \times 100.$$

The aqueous coating composition is prepared by techniques which are well known in the coatings art. First, if the coating composition is to be pigmented, at least one pigment may be well dispersed in an aqueous medium under high shear such as is afforded by a COWLES™ mixer or, in the alternative, at least one predispersed pigment may be used. Then the thermoplastic emulsion polymer may be added under low shear stirring along with other coatings adjuvants as desired. Alternatively, the thermoplastic emulsion polymer may be present during the pigment dispersion step. The aqueous coating composition may contain conventional coatings adjuvants such as, for example, emulsifiers, buffers, neutralizers, coalescents, thickeners or rheology modifiers, freeze-thaw additives, wet-edge aids, humectants, wetting agents, biocides, antifoaming agents, colorants, waxes, and anti-oxidants.

The solids content of the aqueous coating composition may be from 25% to 60% by volume. The viscosity of the aqueous polymeric composition may be from 50 KU (Krebs Units) to 120 KU as measured using a Brookfield Digital viscometer KU-1; the viscosities appropriate for different application methods vary considerably.

Conventional coatings application methods such as, for example, brushing, rolling, and spraying methods such as, for example, air-atomized spray, air-assisted spray, airless spray, high volume low pressure spray, and air-assisted airless spray may be used in the method of this invention. The aqueous coating composition may be advantageously applied to substrates such as, for example, plastic, metal, primed surfaces, previously painted surfaces, weathered painted surfaces and cementitious substrates. Drying is typically allowed to proceed under ambient conditions such as, for example, at 0 °C to 35 °C, but drying at higher temperatures may be used to speed the process.

The set of dried coatings is exposed to ambient outdoor conditions for a period of time sufficient to provide an exposed first coating which, when subjected to a chemiluminescence test, is differentiated from one or more of the other coating(s) in the exposed set of coatings. The minimum time required to effect an unabiguous result is preferred. It has been found that such a result may, in some instances, be observed after as little as two weeks of outdoor exposure and to predict the relative outdoor durability of the exposed set of coatings, i.e., to correlate with more conventional indicators of outdoor durability such as, for example, gloss retention observed after a year of outdoor exposure. The set of coatings are exposed to the same ambient outdoor conditions for the same period of time although minor variations in the placement of the coatings and in the exposure times are not excluded from the process thereby. The coatings may be exposed at various angles from vertical to horizontal and directions from north-facing to south-facing.

The exposed coatings are subjected to a chemiluminescence test in which chemiluminescence from the sample is measured. Essentially the exposed sample is heated under an inert gas such as nitrogen, in the dark, until essentially all of the light is emitted from the sample and measured. A sufficiently sensitive instrument is required. Chemiluminescence signal intensities herein were measured by the single photon technique, using a Hamamatsu H6240 single photon counting assembly modified with an R4220P PMT. For some samples, single photon counting sensitivity may not be required, and devices such as analog detectors or CCD (charge-coupled device) cameras may be used for signal detection. Filters or wave length discrimination devices may be used. It is believed that the measured light signal arises from the heat-induced decomposition of species such as hydroperoxides engendered when the emulsion polymer component of the coating is exposed to outdoor conditions. In the data provided the following test as detailed in the Experimental Procedures section herein was used, although a range of conditions and a variety of measuring instruments are believed to be useful in effecting the same relative results. An instrument such as the CL100 ChemiLume (Atlas Electric Devices Co., Chicago IL 60613) may be used for the measurements.

In one embodiment the method of this invention is practiced as a high throughput technique. Optionally, samples of the emulsion polymers and the resultant aqueous coating compositions used in the method of this invention may be formed on a small scale such as, for example, less than 1 cc. of each of the set of aqueous coating compositions may be formed and may be formed in parallel, i.e. separately and in the same time period. Optionally, a plurality of samples may be applied to spatially discrete areas of a substrate to form the set of coatings used in this invention such as, for example, each aqueous coating composition may be applied to 1 sq. cm. of a substrate and dried. Then the set of coatings may be exposed outdoors for a time and the chemiluminescence test performed on each coated, exposed area for predicting the outdoor durability of the first coating relative to the outdoor durability of other members of the set or relative to the known outdoor durability of one or more members of the set.

The following examples are presented to illustrate the invention and the results obtained by the Experimental Procedures.

Experimental Procedures

Measurement of Chemiluminescence

Coatings to be tested were formed on Aluminium panels and allowed to dry under ambient conditions, 10mil wet/5 mil dry. An approximately 1.1 x 3.1 cm rectangle of the coated plate was cut and mounted in an A1 sample holder for measurement in a Chemiluminescence spectrophotometer. Samples were placed in the instrument oven at room temperature which was then sealed, light tight, and flushed with $N_2$ gas for 10 minutes before the beginning of the experiment. While maintaining an inert atmosphere, by continuously flushing the oven with a stream of $N_2$ (flowrate of 1.0 L/min), the temperature was ramped from ambient to 150°C in 40 minutes. At 150°C the temperature was held constant for 250 minutes or until the residual chemiluminescence signal had decreased to less than 250 counts/second. No filters or wave length discrimination devices were used. The corrected integrated chemiluminescence signal, which is defined herein as the peak area from the exposed sample less the peak area for the corresponding unexposed sample was taken as an indicator of the formation of compositions detrimental to outdoor durability, i.e., the smaller the signal, the lower the number of counts, the better the outdoor durability.

EXAMPLE 1. Evaluation of relative outdoor durability

Three semigloss coatings (Coatings 1-3) were prepared from predominantly acrylic thermoplastic emulsion polymers, Polymers A-C. The coating compositions were prepared according to the formulation presented in Table 1.1. The coatings were exposed to outdoor conditions, south-facing at a 45 degree angle up to 8 weeks at Spring House, PA. The corrected integrated peak areas, from the chemiluminescence test are presented in Table 1.2

High gloss white coatings (25 PVC/32 VS) (Coatings 4-6) were also prepared from the same predominantly acrylic thermoplastic emulsion polymers, Polymers A-C, and subjected to conventional long-term outdoor exposure; the results of outdoor exposure evaluated by two commonly used measures, gloss retention and tint retention, are presented in Tables 1.3 and 1.4.

Table 1.1

| Formulation ingredients used in preparing aqueous coating compositions 1-3. | | | |
| --- | --- | --- | --- |
| MATERIAL | coating 1 | coating 2 | coating 3 |
| Propylene Glycol | 43.3 | 43.3 | 43.3 |
| KATHONTM™ LX | 1.7 | 1.7 | 1.7 |

Table 1.1   (continued)

| Formulation ingredients used in preparing aqueous coating compositions 1-3. | | | |
|---|---|---|---|
| MATERIAL | coating 1 | coating 2 | coating 3 |
| TAMOL™ 1124 | 5.0 | 5.0 | 5.0 |
| TRITON™ CF-10 | 2.2 | 2.2 | 2.2 |
| FOAMASTER™ AP | 2.0 | 2.0 | 2.0 |
| TIPURE™ R-706 | 200.0 | 200.0 | 200.0 |
| Polymer A | 502.0 | | |
| Polymer B | | 550.0 | |
| Polymer C | | | 561.0 |
| TEXANOL™ | 25.0 | 46.0 | 46.0 |
| FOAMASTER™ AP | 2.0 | 2.0 | 2.0 |
| ACRYSOL™ RM-5 | 28.0 | 28.0 | 23.0 |
| NH4OH | 4.0 | 4.0 | 4.0 |
| ROZONE™ 2000 | | | 6.5 |
| WATER | 201.0 | 118.0 | 100.0 |
| ACRYSOL, KATHON and TAMOL are trademarks of Rohm and Haas Company; TEXANOL is a trademark of Eastman Chemical Co.; TI-PURE is a trademark of E.I. DuPont DeNemours Co.; NATROSOL is a trademark of Aqualon Div., Hercules Inc.; FOAMASTER is a trademark of Henkel Corp. | | | |

Table 1.2

| Corrected Integrated Chemiluminescence Peak Areas | | | |
|---|---|---|---|
| Exposure Time (weeks) | Coating 1 | Coating 2 | Coating 3 |
| 0 | 0 | 0 | 0 |
| 2 | 3070 | 9120 | 6510 |
| 4 | 1500 | 11660 | 10590 |
| 6 | 1110 | 11740 | 14270 |
| 8 | 2590 | 14480 | 22600 |

Table 1.3 Outdoor durability of coatings 4-6 containing polymers A-C, resp., as measured by 60 degree gloss retention

| Coating / Months Exposure | 0 | 6 | 15 | 26 | 42 | % retained |
|---|---|---|---|---|---|---|
| Coating 4 | 72 | 71 | 70 | 59 | 41 | 56.9% |
| Coating 5 | 71 | 64 | 63 | 42 | 17 | 23.9% |
| Coating 6 | 69 | 65 | 56 | 33 | 12 | 17.4% |

Table 1.4

| Outdoor durability of coatings 4-6 containing polymers A-C, resp., as measured by tint retention | | | | | |
|---|---|---|---|---|---|
| Coating / Months Exposure | 0 | 6 | 15 | 26 | 42 |
| Coating 4 | 10 | 9.9 | 9.9 | 8.0 | 6.3 |
| Coating 5 | 10 | 9.9 | 9.9 | 6.3 | 6.0 |

Table 1.4   (continued)

| Outdoor durability of coatings 4-6 containing polymers A-C, resp., as measured by tint retention | | | | | |
|---|---|---|---|---|---|
| Coating / Months Exposure | 0 | 6 | 15 | 26 | 42 |
| Coating 6 | 10 | 9.9 | 9.9 | 5.0 | 4.7 |

The method of this invention performed on a set of coatings, coatings 1-3, provided a prediction of outdoor durability of a first coating relative to that of the others of the set, the same as has been found in conventional long-term outdoor durability of coatings 4-6 incorporating the same thermoplastic emulsion polymers.

EXAMPLE 2. Prediction of relative outdoor durability

Three coatings (Coatings 7-9) were prepared from thermoplastic emulsion polymers, Polymers D-F, known by traditional long-term outdoor durability testing in various formulations under various conditions to demonstrate a range of durability from superior (Polymer D) to intermediate (Polymer E) to less durable (Polymer F). The coating compositions were prepared according to the formulation presented in Table 2.1. The dried coating samples were exposed to outdoor conditions, south at a 45 degree angle up to 15 weeks at Spring House, PA. The integrated peak areas, normalized to zero peak areas for unexposed samples, from the chemiluminescence test are presented in Table 2.2

Table 2.1

| Formulation ingredients used in aqueous coating compositions | |
|---|---|
| Material Name | grams |
| Grind | |
| Water | 113.95 |
| TAMOL™ 850 (30.0%) polyacid dispersant | 3.58 |
| KTPP | 1.04 |
| NOPCO NXZ defoamer | 1.41 |
| NATROSOL™ 250 MHR hydroxyethyl cellulose | 3.13 |
| KADOX™ 915 zinc oxide | 34.9 |
| TI-PURE™ R-706 titanium dioxide | 54.19 |
| DURAMITE™ filler | 313.46 |
| SKANE M-8 biocide | 1.56 |
| Ammonia (28%) | 0.74 |
| LetDown | |
| Aqueous emulsion polymer (Polymers D-F) (as 50%) | 407.52 |
| NOPCO NXZ defoamer | 1.41 |
| TEXANOL™ | 5.51 |
| Ethylene glycol | 18.18 |
| ACRYSOL, SKANE, and TAMOL are trademarks of Rohm and Haas Company; TEXANOL is a trademark of Eastman Chemical Co.; TI-PURE is a trademark of E.I. DuPont DeNemours Co.; NATROSOL is a trademark of Aqualon Div., Hercules Inc. | |

Table 2.2

| Corrected Integrated Chemiluminescence Peak Areas | | | |
|---|---|---|---|
| Outdoor Exposure (weeks) | Coating 7 | Coating 8 | Coating 9 |
| 0 | 0 | 0 | 0 |
| 4 | 25500 | 64870 | 44500 |
| 6 | 29960 | 72950 | 54290 |
| 8 | 36130 | 87290 | 83380 |

Table 2.2   (continued)

| Corrected Integrated Chemiluminescence Peak Areas | | | |
|---|---|---|---|
| Outdoor Exposure (weeks) | Coating 7 | Coating 8 | Coating 9 |
| 11 | 42000 | 78880 | 78690 |
| 13 | 42090 | 82420 | 89700 |
| 15 | 43500 | 82020 | 85940 |

The outdoor durability of Coating 7 was predicted by the method of this invention to be superior to that of Coatings 8-9, even after one month outdoor exposure, the same result as has been found historically by long term outdoor exposure.

**Claims**

1. A method for predicting the outdoor durability of a first coating relative to the outdoor durability of at least one other of a set of coatings, all of said coatings having been formed from aqueous coating compositions comprising a thermoplastic emulsion polymer and, optionally, a pigment, comprising exposing said set of coatings to the same ambient outdoor conditions for the same period of time, subjecting said exposed coatings to a chemiluminescence test, and comparing the result of said chemiluminescence test performed on said first coating to the corresponding result for at least one other of said set of coatings.

2. The method of claim 1 wherein said coatings differ from one another in the composition of said thermoplastic emulsion polymer.

3. The method of claim 2 wherein said thermoplastic emulsion polymer is a predominantly acrylic polymer.

4. The method of claim 2 wherein said period of time is one month or less.